# DEMANDE DE BREVET EUROPEEN

(11) **EP 1 095 839 A1**
(43) Date de publication de la demande: **02.05.2001**
(21) Numéro de dépôt: 00402708.2
(22) Date de dépôt: 02.10.2000
(51) Int. Cl.: B62B 3/18

(54) **Chariot emboîtable adapté à recevoir des objects volumineux**

(30) Priorité: 27.10.1999 FR 9913444
(71) Demandeur: ATELIERS REUNIS CADDIE, F-67300 Schiltigheim (FR)
(72) Inventeur: Joseph, Alice, 67301 Schiltigheim Cedex (FR); Le Marchand, Alain, 67116 Reichstett (FR)
(74) Mandataire: CABINET BONNET-THIRION

(57) **Abrégé**

Chariot emboîtable, du genre comportant un châssis (11) constitué, d'une part, de deux montants latéraux (12) dont la partie supérieure supporte une corbeille (14) et, d'autre part, d'un socle (13) supportant les montants latéraux (12), ledit chariot comportant par ailleurs un support d'objets (22), le support d'objets (22) étant monté articulé, par une de ses extrémités, sur le châssis (11) du chariot (10) en sorte qu'il peut occuper deux positions, une position opérationnelle et une position relevée, les montants latéraux (12) étant solidarisés au socle (13) à l'extrémité arrière de celui-ci et deux jambes de force (18) étant prévues pour soutenir la corbeille (14) : les jambes de force (18) et le support d'objets (22) sont agencés en sorte que, lors de l'emboîtement de deux tels chariots (10), les jambes de force (18A) d'un chariot (10A) sont adaptées à faire basculer le support d'objets (22) du chariot qui le précède (10) de sa position opérationnelle à sa position relevée.

## Description

La présente invention concerne un chariot emboîtable adapté à recevoir des objets volumineux.

Plus précisément, elle concerne un chariot emboîtable du genre de ceux mis à disposition de la clientèle dans les grandes surfaces.

Un tel chariot comporte généralement un châssis constitué, d'une part, de deux montants latéraux dont la partie supérieure supporte une corbeille et, d'autre part, un socle supportant les montants latéraux ; le socle et/ou les montants supportent des roues, au moins une roue avant montée pivotante et deux roues arrière.

On a souvent cherché à équiper un tel chariot de moyens permettant le transport d'objets volumineux, souvent lourds, tels que caisses de boissons, sacs de pommes de terre ou autres, sans avoir à les soulever jusque dans la corbeille ; par ailleurs, de tels moyens permettent également d'accroître la surface de chargement du chariot, notamment lorsque la corbeille est de petit volume ou lorsque le socle est dépourvu de plateforme inférieure, généralement à l'avant du socle.

De nombreuses solutions ont été proposées.

Certaines consistent à faire porter un support d'objets par la corbeille, soit à l'avant, comme dans le document DE-A-32 08 691, soit à l'arrière, comme dans le document FR-A-2 530 570 ; ces solutions présentent l'inconvénient de réduire la visibilité lors de la manoeuvre du chariot ; par ailleurs, en cas de chute, les produits tombent d'une hauteur importante.

On a également proposé de placer un support d'objets sous la corbeille ; d'une façon générale, il s'agit d'une grille montée coulissante et/ou articulée, par rapport aux montants latéraux, juste sous la corbeille ; c'est le cas par exemple des chariots décrits dans les documents FR-A-2 645 487, FR-A-2 652 326, FR-A-2 665 133, EP-A-0141 398 ; les produits sont à une hauteur encore importante et, en arrière de la corbeille, gênent l'usager dans ses manoeuvres ; en outre, en position repliée, ces supports d'objets limitent l'emboîtement des chariots.

Dans le document EP-A-0751 057, le support d'objets est en deux parties, une partie fixe et une partie articulée sur les montants latéraux ; les objets sont à mi-hauteur entre le sol et le fond de la corbeille, mais une telle disposition présente également les inconvénients ci-dessus : gêne de l'usager et limitation de l'emboîtement.

L'invention a pour objet un chariot emboîtable équipé d'un support d'objets non seulement ne présentant pas ces inconvénients mais également conçu en sorte que le support d'objets puisse être mis automatiquement dans une position repliée lors de l'emboîtement de deux tels chariots.

Selon l'invention, un chariot emboîtable, du genre comportant un châssis constitué, d'une part, de deux montants latéraux dont la partie supérieure supporte une corbeille et, d'autre part, d'un socle supportant les montants latéraux, ledit chariot comportant par ailleurs un support d'objets, le support d'objets étant monté articulé, par une de ses extrémités, sur le châssis du chariot en sorte qu'il peut occuper deux positions, une position opérationnelle et une position relevée, les montants latéraux étant solidarisés au socle à l'extrémité arrière de celui-ci et deux jambes de force étant prévues pour soutenir la corbeille, est caractérisé par le fait que les jambes de force et le support d'objets sont agencés en sorte que, lors de l'emboîtement de deux tels chariots, les jambes de force d'un chariot sont adaptées à faire basculer le support d'objets du chariot qui le précède de sa position opérationnelle à sa position relevée.

Avantageusement, l'axe d'articulation du support d'objets porté par le socle est situé entre les jambes de force et les montants latéraux.

De préférence, le support d'objets est en fils soudés.

Avantageusement, le support d'objets comporte une ceinture en forme générale de U dont les ailes ont leur extrémité libre pliée vers l'extérieur parallèlement à l'âme du U pour constituer des demi-axes d'articulation, la largeur de la ceinture étant inférieure à la distance transversale qui sépare les deux montants mais supérieure à celle qui sépare les jambes de force.

De préférence, la ceinture entoure et supporte une grille.

Avantageusement, les bords transversaux de la grille sont relevés.

De préférence, le support d'objets présente une traverse

Selon une forme de réalisation, la traverse est disposée sous la grille au voisinage de son axe d'articulation, en étant dûment assujettie à celle-ci, la longueur de la traverse étant supérieure à la largeur de la grille en sorte que ses extrémités dépassent latéralement de part et d'autre de la grille et sont adaptées à reposer, en position opérationnelle du support d'objets, sur le socle.

De préférence, les extrémités de la traverse sont coiffées d'embouts à tête, par exemple en matière plastique.

Avantageusement, le support d'objets est muni d'au moins un arceau s'étendant sous la grille, la concavité de l'arceau étant dirigée vers la grille.

De préférence, l'arceau s'étend globalement dans un plan perpendiculaire au plan général de la grille.

Avantageusement, l'arceau définit une rampe ayant au moins une pente adaptée à coopérer avec l'avant du socle du chariot suivant lors de l'emboîtement de deux chariots.

De préférence, la ceinture est adaptée à coopérer avec les jambes de force du chariot suivant lors de l'emboîtement de deux chariots.

Avantageusement, les jambes de force sont coudées en sorte que sont définis deux brins, un brin inférieur et un brin supérieur, inclinés l'un par rapport à l'autre et par rapport à la verticale, la concavité du coude étant tournée vers l'avant du chariot.

Selon une autre forme de réalisation, la ceinture supporte la traverse qui est en forme générale de U dont les ailes sont fixées aux ailes de la ceinture prévus en forme de U et dont l'âme est parallèle à l'âme de la ceinture.

De préférence, les ailes de la traverse sont raccordées à l'âme de celle-ci par des ponts en U.

Avantageusement, les ponts sont longitudinalement au droit des jambes de force.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue schématique en élévation d'un chariot emboîtable selon l'invention, le support d'objets étant en position opérationnelle ;
- la figure 2 est une vue en perspective, à plus grande échelle, du support d'objets du chariot de la figure 1 ;
- la figure 3 est une vue partielle, analogue à la figure 1, le support d'objets étant en position relevée ;
- les figures 4 à 8 sont des vues analogues aux figures 1 et 3 montrant les différentes étapes de passage du support d'objets de sa position opérationnelle à sa position relevée lors de l'emboîtement de deux chariots ;
- la figure 9 est une vue schématique en élévation d'une variante de chariot emboîtable selon l'invention, le support d'objets étant en position opérationnelle ;
- la figure 10 est une vue agrandie d'une partie au droit de la bulle A de la figure 9, vue selon la flèche X de la figure 12 ;
- la figure 11 est une vue en perspective, à plus grande échelle, du support d'objets du chariot de la figure 9 ;
- la figure 12 est une vue de dessus du chariot de la figure 9 dans sa corbeille ;
- la figure 13 est une vue de droite du chariot de la figure 9 sous sa corbeille ;
- la figure 14 est une vue partielle, analogue à la figure 9, le support d'objets étant en position relevée ;
- la figure 15 est une vue agrandie d'une partie au droit de la bulle B de la figure 10, vue selon la flèche X de la figure 12 ;
- les figures 16 à 20 sont des vues analogues aux figures 9 et 14 montrant les différentes étapes de passage du support d'objets de sa position opérationnelle à sa position relevée, lors de l'emboîtement de deux chariots ;
- les figures 21 et 22 sont des vues analogues à la figure 11 et montrent chacune une variante.

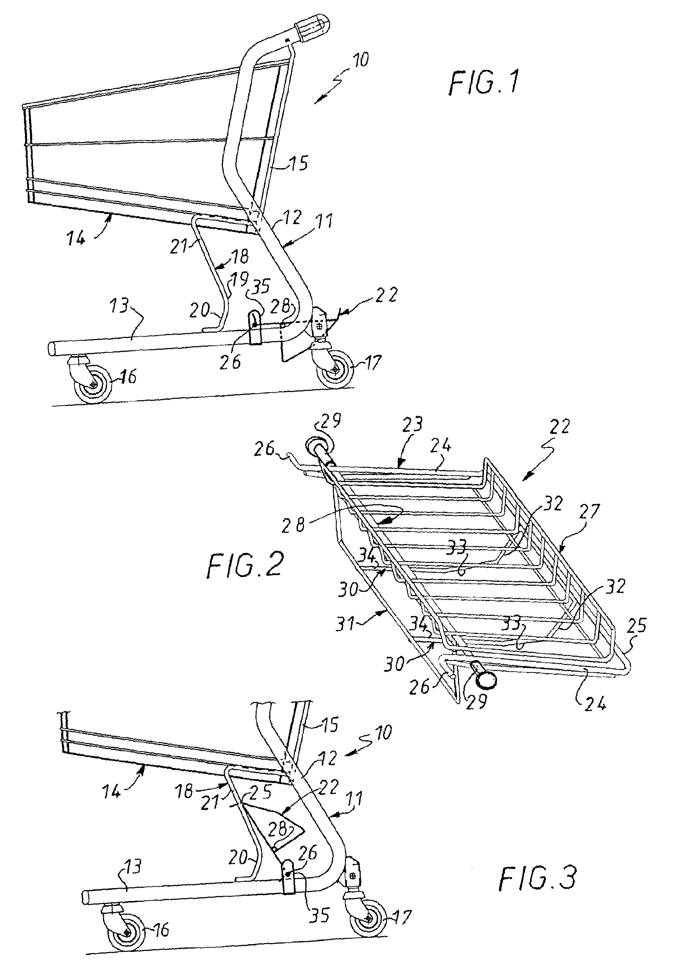

Le chariot 10 représenté sur la figure 1 comporte un châssis 11 constitué de deux montants latéraux 12 et d'un socle 13.

A leur extrémité supérieure, les montants latéraux 12 supportent une poignée de préhension ou barre de manoeuvre et, sous celle-ci, un panier ou corbeille 14, esquissée sur la figure 1, de forme générale classique, du genre pyramidale, ayant à l'arrière 15 une paroi arrière, non représentée, en forme de volet articulé à sa partie supérieure en sorte qu'il peut, comme on le sait, pivoter vers l'intérieur de la corbeille 14, poussé par l'avant de la corbeille du chariot qui suit, lors de l'emboîtement de deux tels chariots ; la corbeille 14 est solidaire par sa partie arrière des montants 12 en étant placée entre ceux-ci.

Le volet arrière supporte, ou non, un siège enfant.

Le socle 13 s'étend pratiquement dans un plan horizontal et est en forme de U ouvert vers l'arrière du chariot 10, les ailes du U n'étant pas parallèles mais plus éloignées l'une de l'autre à l'arrière du chariot qu'à l'avant ; ainsi, lors de l'emboîtement, les socles 13 peuvent s'encastrer les uns dans les autres.

A l'avant, le socle 13 supporte une (ou deux) roue(s) avant 16 et deux roues arrière 17.

Ici, le socle 13 et les montants latéraux 12 sont d'une seule pièce, obtenus par pliage d'un même tube, mais il pourrait en être autrement ; le socle 13 et les montants 12 pourraient être des pièces séparées assemblées, par exemple par soudage.

Chaque aile du U du socle 13 reçoit à fixation une extrémité d'une jambe de force 18 dont l'autre extrémité est fixée à la corbeille 14 ; en dehors de ses extrémités de fixation, la jambe de force 18 est coudée en 19 en sorte que sont définis deux brins, un brin inférieur 20 et un brin supérieur 21 ; les deux brins 20 et 21 sont inclinés, d'une part, l'un par rapport à l'autre et, d'autre part, par rapport à la verticale, la concavité du coude 19 étant tournée vers l'avant du chariot.

Les jambes de force 18 sont situées légèrement à l'avant par rapport aux montants latéraux 12.

Le chariot 10 est équipé d'un support d'objets 22 permettant notamment le transport d'objets volumineux, souvent lourds, tels que caisses de boissons ou autres, sans avoir à les soulever jusque dans la corbeille 14.

Suivant l'invention, le support d'objets 22 est monté par une de ses extrémités articulé sur le socle 13 du chariot 10.

Ici, le support d'objets 22, mieux visible sur la figure 2, est en fils soudés et comporte une ceinture 23 en forme générale de U dont les ailes 24 ont leur extrémité libre pliée vers l'extérieur parallèlement à l'âme 25 du U pour constituer des demi-axes d'articulation 26 ; la ceinture 23 entoure et supporte une grille 27 dont les bords transversaux sont avantageusement relevés pour le calage des objets, dans le sens axial par rapport au chariot 10, c'est-à-dire dans la direction de déplacement du chariot 10.

Sous la grille 27, dûment assujettie à celle-ci, le support d'objets 22 présente, au voisinage de son axe d'articulation, une traverse 28, dont la longueur est supérieure à la largeur de la grille 27 en sorte que ses extrémités dépassent latéralement de part et d'autre de celle-ci ; avantageusement, ces extrémités sont coiffées d'embouts 29 à tête, par exemple en matière plastique.

Sous la grille 27 également, le support d'objets 22 est muni d'au moins un arceau 30 solidaire, d'un côté, de l'âme 25 de la ceinture 23 et, de l'autre côté, d'une entretoise 31 en forme de U s'étendant globalement au droit de la traverse 28 dans un plan par exemple perpendiculaire au plan général de la grille 27, la concavité du U de l'entretoise 31 étant dirigée vers la grille 27 ; ici le support d'objets 22 est muni de deux arceaux 30.

Grâce à cette disposition, chaque arceau 30, qui s'étend dans un plan perpendiculaire à une direction transversale, telle que celle définie par la traverse 28, a nécessairement une forme concave, à concavité dirigée vers la grille 27, et une rampe est définie depuis l'âme 25 de la ceinture 23 jusqu'à l'entretoise 31 ; ici, la rampe est à trois pentes, une première pente 32 relativement inclinée, une deuxième pente 33 moins inclinée que la première et une troisième pente 34 parallèle globalement à la grille 27.

Le support d'objets 22 est monté articulé sur le socle 13 ; pour ce faire, celui-ci porte latéralement, à l'arrière des jambes de force 18, globalement à mi-chemin entre les attaches au socle 13 des jambes de force 18 et des montants 12, des plaquettes 35 munies de trous dans lesquels sont introduits les demi-axes 26 du support d'objets 22.

Les dimensions du support d'objets 22 sont telles que la grille 27 elle-même peut passer entre les jambes de force 18, donc entre les montants latéraux 12, plus espacés transversalement que ne le sont les jambes de force 18 ; la ceinture 23 peut passer entre les montants latéraux 12 mais ne peut pas passer entre les jambes de force 18 ; par ailleurs, la traverse 28 est plus longue que la largeur du socle 13.

Grâce à ces dispositions, en position opérationnelle, figure 1, le support d'objets 22 est en appui sur le socle 13 par sa traverse 28, plus précisément par les embouts 29 à tête qui recouvrent les extrémités de celle-ci ; en position non opérationnelle, c'est-à-dire en position relevée, figure 3, le support d'objets 22 est incliné vers l'avant du chariot 10 et repose sur les jambes de force 18, par l'intermédiaire de sa ceinture 23, plus précisément par l'intermédiaire de l'âme 25 de celle-ci.

On appréciera le faible encombrement du support d'objets 22 dans l'une et l'autre de ces positions ; en position opérationnelle, le support d'objets 22 est au plus à l'aplomb de la barre de manoeuvre du chariot 10, la grille 27 étant globalement horizontale, et, en position escamotée relevée, l'arrière du chariot 10 est complètement dégagé, le support d'objets 22 disparaissant quasiment complètement sous le fond de la corbeille 14, en étant pratiquement en position verticale, substantiellement dans le plan des jambes de force 18.

De plus, l'agencement est tel que le support d'objets 22 est automatiquement mis en position relevée, c'est-à-dire non opérationnelle, lors de l'emboîtement de deux tels chariots.

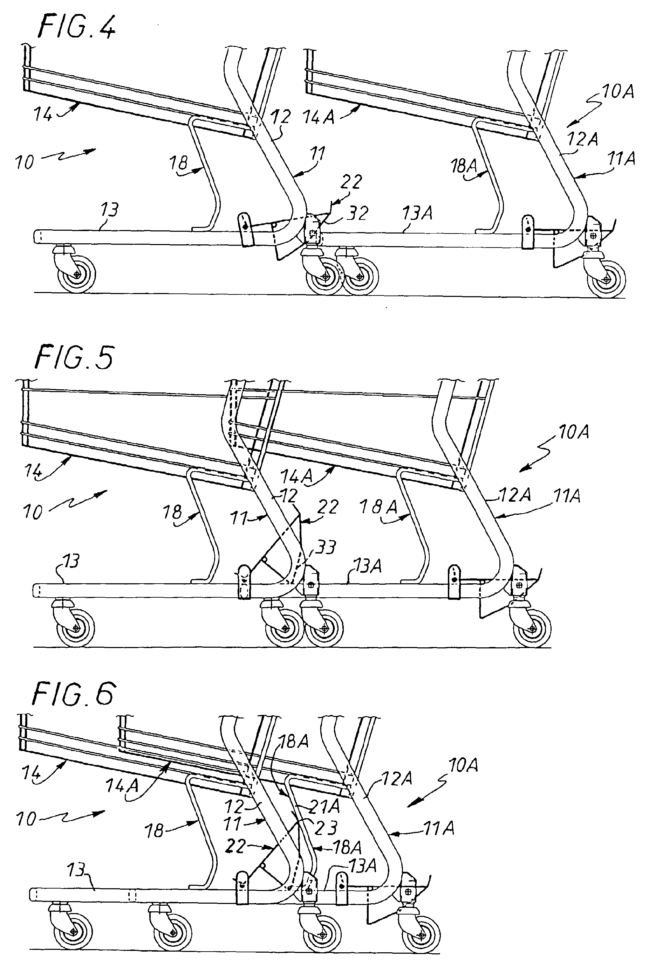

Les figures 4 à 8 montrent les différentes phases du relevage automatique du support d'objets 22 lors d'un tel emboîtement.

Sur ces figures, le chariot 10A, suivant le chariot 10, est emboîté dans le chariot 10 ; les composants du chariot 10A, identiques aux composants du chariot 10, portent la même référence suivie de la lettre A.

Dans un premier temps, l'avant du socle 13A du chariot 10A vient au contact de la première pente 32 des arceaux 30, du chariot 10, le long de laquelle il glisse en faisant tourner, par effet de came, le support d'objets 22 vers l'avant, figure 4 ; puis, l'avant du socle 13A glisse le long de la deuxième pente 33 des arceaux 30, accentuant ainsi la rotation du support d'objets 22, figure 2 ; la troisième pente 34 est telle que, le chariot 10A continuant d'avancer, le support d'objets 22 reste dans cette position jusqu'au contact des jambes de force 18A du chariot 10A avec la ceinture 23 du chariot 10, figure 6 ; en glissant sur le brin supérieur 21A des jambes de force 18A, la ceinture 23 fait tourner par sa partie supérieure davantage le support d'objets 22.

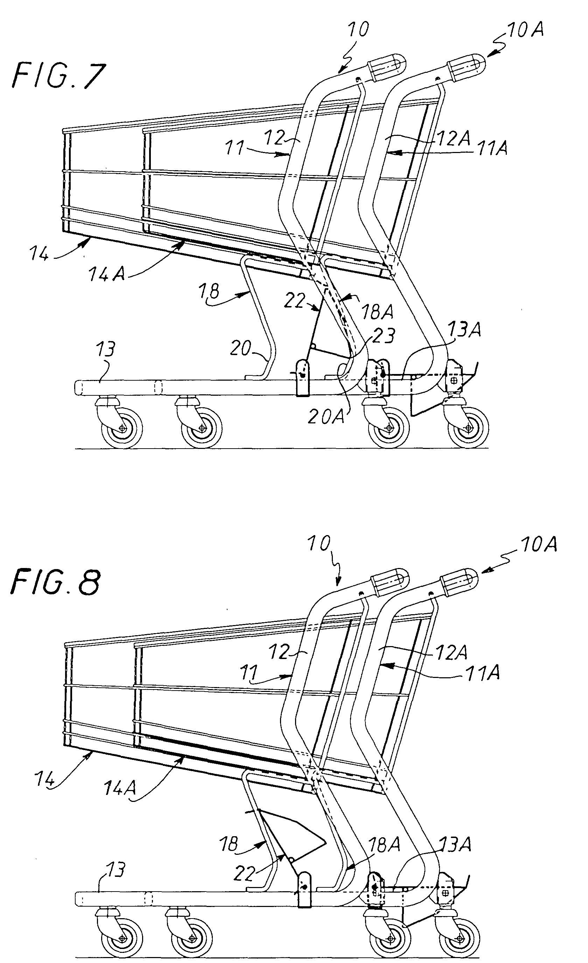

La partie inférieure de la ceinture 23 et le brin inférieur 20A des jambes de force 18A prennent ensuite respectivement le relais, figure 7, et la rotation du support d'objets 22 se poursuit : au delà de sa position verticale, il tombe par son propre poids en appui contre les jambes de force 18 du chariot 10, figure 8 ; comme on peut le voir sur cette figure, malgré la présence du support d'objets 22, les deux chariots 10 et 10A sont emboîtés au maximum, les parties supérieures de leurs montants latéraux 12 et 12A étant très proches l'une de l'autre, pratiquement à se toucher.

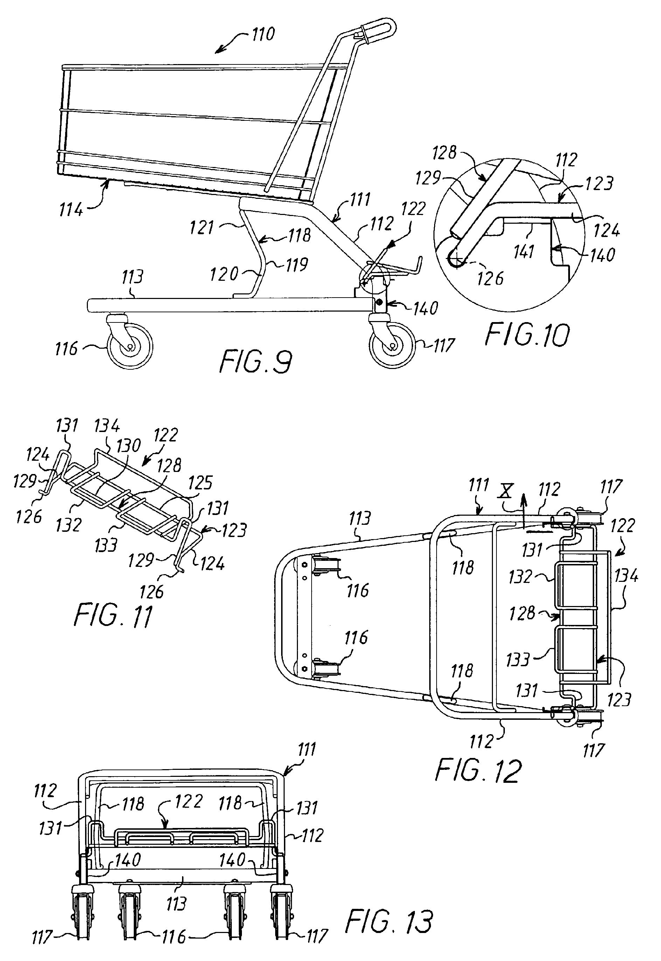

En se reportant aux figures 9 à 13, on voit un chariot 110 comportant un châssis 111 constitué d'un socle 113 et de deux montants latéraux 112.

Ici, les montants latéraux 112 sont constitués par les ailes d'un arceau-support en forme générale de U qui porte un panier ou corbeille 114, de forme générale classique, du genre pyramidale, du genre de celle de la variante précédente ; ici, c'est la corbeille 114 qui supporte une poignée de préhension ou barre de manoeuvre.

Le socle 113 s'étend pratiquement dans un plan horizontal et est en forme de U ouvert vers l'arrière du chariot 110, les ailes du U n'étant pas parallèles mais plus éloignées l'une de l'autre à l'arrière du chariot qu'à l'avant, en sorte que, lors d'un emboîtement, les socles 113 s'encastrent les uns dans les autres.

A l'avant, le socle 113 supporte une (ou deux) roue(s) avant 16.

Les ailes ou montants 112 de l'arceau-support présentent trois tronçons dont un tronçon, à son extrémité libre, qui est pratiquement vertical et porte une roue arrière 117 ; c'est par ce tronçon vertical que chaque montant 112 est solidarisé au socle 113, par exemple par soudage ; ce tronçon vertical est relié, par un tronçon oblique, à un tronçon dit de support légèrement incliné par rapport à l'horizontal, sur lequel repose la corbeille 114 et auquel elle est fixée, par exemple par soudage.

Chaque aile du U du socle 113 reçoit à fixation une extrémité d'une jambe de force 118 dont l'autre extrémité est fixée en bout du tronçon de support du montant 112 en regard, là où ledit tronçon de support rejoint l'âme du U de l'arceau de support ; en dehors de ses extrémités de fixation, chaque jambe de force 118 est coudée en 119 en sorte que sont définis deux brins, un brin inférieur 120 et un brin supérieur 121 ; les deux brins 120 et 121 sont inclinés, d'une part, l'un par rapport à l'autre et, d'autre part, par rapport à la verticale, la concavité du coude 119 étant tournée vers l'avant du chariot.

Les jambes de force 118 sont situées légèrement à l'avant par rapport aux montants latéraux 112 ; ici, les deux jambes de force 112 appartiennent à une même pièce en fil plié globalement en U, mais il pourrait en être autrement.

Selon cette variante, le support d'objets 122 est monté articulé sur deux plaquettes latérales 140 solidarisées au châssis 111, à l'arrière de celui-ci.

Ici, le support d'objets 122, mieux visible sur la figure 10, est en fils soudés et comporte une ceinture 123 en forme générale de U dont les ailes 124 ont leur extrémité libre pliée vers l'extérieur parallèlement à l'âme 125 du U pour constituer des demi-axes d'articulation 126 ; la ceinture 123 supporte une traverse 128 en forme générale de U dont les ailes 129 sont fixées aux ailes 124 de la ceinture 123 et dont l'âme 130 est parallèle à l'âme 125 de la ceinture 123 ; les ailes 129 de la traverse 128 sont raccordées à l'âme 130 de celle-ci par des ponts 131 en U, s'étendant vers le haut, légèrement en oblique vers l'arrière du chariot lorsque la ceinture 123 s'étend dans un plan horizontal.

Ici, les âmes 125 de la ceinture 123 et 130 de la traverse 128 supportent des étriers 132, 133, 134 pour constituer une grille adaptée à recevoir des objets ; l'un 134 s'étend selon deux plans à angle droit pour réaliser un rebord pratiquement vertical de retenue pour lesdits objets.

Le support 122 est donc monté articulé sur le socle 113 par ses demi-axes 126 introduits dans des trous que présentent les plaquettes 140 ; celles-ci sont placées à l'arrière du châssis 111, au droit de la jonction entre le socle 113 et les montants 112, à l'intérieur de ceux-ci.

Les dimensions du support d'objets 122 sont telles qu'il peut, par pivotement, se débattre entièrement entre les montants 112.

Il est à noter par ailleurs que, comme cela est clairement visible sur la figure 13, les ponts 131 sont longitudinalement au droit des jambes de force 118 ; il en est de même des extrémités transversales de l'âme 125 de la ceinture 123, l'étrier 134 étant moins large que ladite ceinture 123.

En position opérationnelle, figures 9, 10, 12 et 13, les ailes 124 de la ceinture 123 reposent sur des retours d'appui 141, ici horizontaux, que présentent à leur partie supérieure les plaquettes 140 en sorte que, dans cette position du support d'objets 122, sa ceinture 123 est dans un plan horizontal.

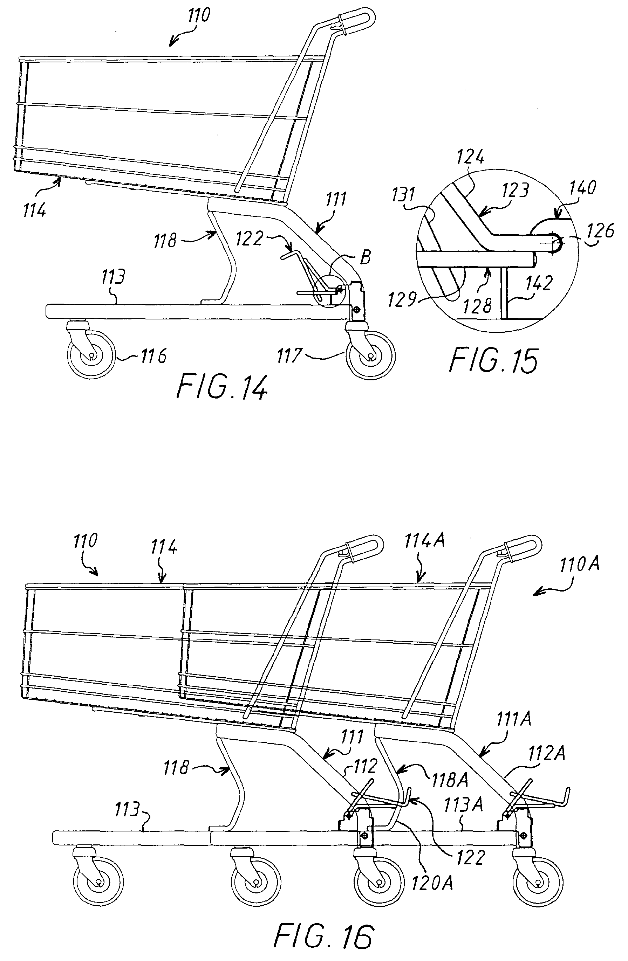

En position non opérationnelle, c'est-à-dire en position relevée, figures 14 et 15, le support d'objets 122 est globalement incliné vers l'avant du chariot 110 et repose ici sur un retour d'appui 142 que présentent à l'avant les plaquettes 140, plus précisément par l'intermédiaire des ailes 129 de la traverse 128.

On appréciera, ici également, le faible encombrement du support d'objets 122 dans l'une et l'autre de ces positions.

Comme pour la variante précédente, le support d'objets 122 est automatiquement mis en position relevée, c'est-à-dire non opérationnelle, lors de l'emboîtement de deux tels chariots.

Les figures 16 à 20 montrent les différentes phases du relevage automatique du support d'objets 122 lors d'un tel emboîtement.

Sur ces figures, le chariot 110A, suivant le chariot 110, est emboîté dans le chariot 110 ; les composants du chariot 110A, identiques aux composants du chariot 110, portent la même référence suivie de la lettre A.

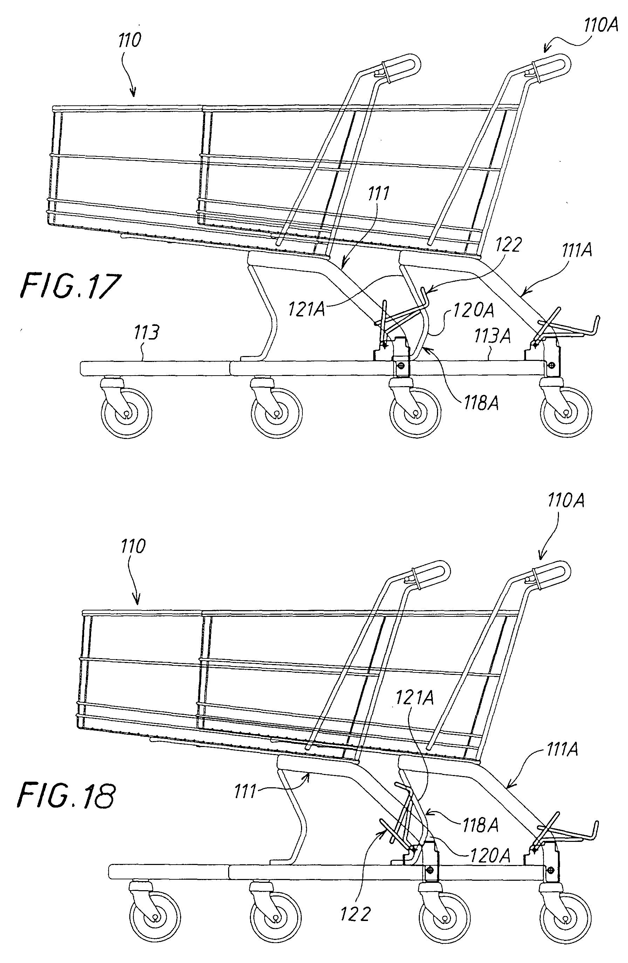

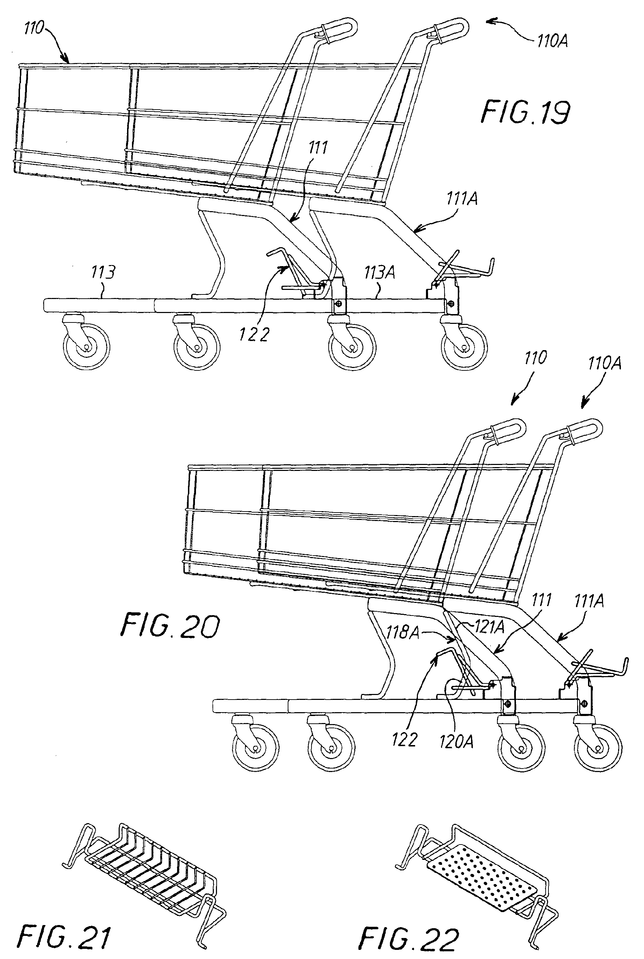

Dans un premier temps, figure 16, les jambes de force 118A du chariot 110A viennent, par leur brin inférieur 120A, au contact du support d'objets 122 du chariot 110, plus précisément au contact de l'âme 125 de sa ceinture 123 ; puis, par effet de came, les brins inférieurs 120A font tourner le support d'objets 122 vers l'avant ; les brins supérieurs 121A des jambes de force 118A prennent ensuite le relais, figures 17 et 18, et font tourner le support d'objets 122 jusqu'à ce qu'il tombe, de son propre poids, dans sa position de repos, figure 19.

Il est à noter que, à partir de cette position, le chariot 110A peut encore s'emboîter davantage grâce à la présence des ponts 131 dans lesquels s'engagent les jambes de force 118A, figure 20.

Les figures 21 et 22 montrent des variantes de supports d'objets qui ne diffèrent du support précédent que par la réalisation de la grille.

## Revendications

1. Chariot emboîtable, du genre comportant un châssis (11, 111) constitué, d'une part, de deux montants latéraux (12, 112) dont la partie supérieure supporte une corbeille (14, 114) et, d'autre part, d'un socle (13, 113) supportant les montants latéraux (12, 112), ledit chariot comportant par ailleurs un support d'objets (22, 122), le support d'objets (22, 122) étant monté articulé, par une de ses extrémités, sur le châssis (11, 111) du chariot (10, 110) en sorte qu'il peut occuper deux positions, une position opérationnelle et une position relevée, les montants latéraux (12, 112) étant solidarisés au socle (13, 113) à l'extrémité arrière de celui-ci et deux jambes de force (18, 118) étant prévues pour soutenir la corbeille (14, 114), caractérisé par le fait que les jambes de force (18, 118) et le support d'objets (22, 122) sont agencés en sorte que, lors de l'emboîtement de deux tels chariots (10, 110), les jambes de force (18A, 118A) d'un chariot (10A, 110A) sont adaptées à faire basculer le support d'objets (22, 122) du chariot qui le précède (10, 110) de sa position opérationnelle à sa position relevée.

2. Chariot emboîtable selon la revendication 1, caractérisé par le fait que l'axe d'articulation du support d'objets (22, 122) porté par le socle (13, 113) est situé entre les jambes de force (18, 118) et les montants latéraux (12, 112).

3. Chariot emboîtable selon l'une des revendications 1 ou 2, caractérisé par le fait que le support d'objets (22, 122) est en fils soudés.

4. Chariot emboîtable selon la revendication 3, caractérisé par le fait que le support d'objets (22, 122) comporte une ceinture (23, 123) en forme générale de U dont les ailes (24, 124) ont leur extrémité libre pliée vers l'extérieur parallèlement à l'âme (25, 125) du U pour constituer des demi-axes d'articulation (26, 126), la largeur de la ceinture (23, 123) étant inférieure à la distance transversale qui sépare les deux montants (12, 112) mais supérieure à celle qui sépare les jambes de force (18, 118).

5. Chariot emboîtable selon la revendication 4, caractérisé par le fait que la ceinture (23, 123) entoure et supporte une grille (27, 132-133-134).

6. Chariot emboîtable selon la revendication 5, caractérisé par le fait que les bords transversaux de la grille (27) sont relevés.

7. Chariot emboîtable selon l'une des revendications 5 ou 6, caractérisé par le fait que le support d'objets (22, 122) présente une traverse (28, 128)

8. Chariot emboîtable selon la revendication 7, caractérisé par le fait que la traverse (28) est disposée sous la grille (27) au voisinage de son axe d'articulation (26), en étant dûment assujettie à celle-ci, la longueur de la traverse (28) étant supérieure à la largeur de la grille (27) en sorte que ses extrémités dépassent latéralement de part et d'autre de la grille (27) et sont adaptées à reposer, en position opérationnelle du support d'objets (22), sur le socle (13).

9. Chariot emboîtable selon la revendication 8, caractérisé par le fait que les extrémités de la traverse (28) sont coiffées d'embouts (29) à tête, par exemple en matière plastique.

10. Chariot emboîtable selon l'une des revendications 5 à 9, caractérisé par le fait que le support d'objets (22) est muni d'au moins un arceau (30) s'étendant sous la grille (27), la concavité de l'arceau (30) étant dirigée vers la grille (27).

11. Chariot emboîtable selon la revendication 10, caractérisé par le fait que l'arceau (30) s'étend globalement dans un plan perpendiculaire au plan général de la grille (27).

12. Chariot emboîtable selon l'une des revendications 10 ou 11, caractérisé par le fait que l'arceau (30) définit une rampe ayant au moins une pente (32,33) adaptée à coopérer avec l'avant du socle (13A) du chariot suivant (10A) lors de l'emboîtement de deux chariots (10, 10A).

13. Chariot emboîtable selon l'une des revendications 4 à 12, caractérisé par le fait que la ceinture (23, 123) est adaptée à coopérer avec les jambes de force (18A, 118A) du chariot suivant (10A, 110A) lors de l'emboîtement de deux chariots (10,10A, 110, 110A).

14. Chariot emboîtable selon la revendication 13, caractérisé par le fait que les jambes de force (18, 118) sont coudées (19, 119) en sorte que sont définis deux brins, un brin inférieur (20, 120) et un brin supérieur (21, 121) inclinés l'un par rapport à l'autre et par rapport à la verticale, la concavité du coude (19, 119) étant tournée vers l'avant.

15. Chariot emboîtable selon l'une des revendications 13 ou 14, rattachée à l'une des revendications 4 ou 5, caractérisé par le fait que la ceinture (123) supporte la traverse (128) qui est en forme générale de U dont les ailes (129) sont fixées aux ailes (124) de la ceinture (123) prévue en forme de U et dont l'âme (130) est parallèle à l'âme (125) de la ceinture (123).

16. Chariot emboîtable selon la revendication 15, caractérisé par le fait que les ailes (129) de la traverse (128) sont raccordées à l'âme (130) de celle-ci par des ponts (131) en U.

17. Chariot emboîtable selon la revendication 16, caractérisé par le fait que les ponts (131) sont longitudinalement au droit des jambes de force (118).
